# EUROPÄISCHE PATENTANMELDUNG

(11) **EP 0 884 272 A1**
(43) Veröffentlichungstag der Anmeldung: **16.12.1998**
(21) Anmeldenummer: 98109802.3
(22) Anmeldetag: 28.05.1998
(51) Int. Cl.: C01B 3/32

(54) **Methanolreformierungsreaktor und Behandlungsverfahren für einen Katalysator hierfür**

(30) Priorität: 13.06.1997 DE 19725006
(71) Anmelder: dbb fuel cell engines GmbH, 73230 Kirchheim/Teck-Nabern (DE)
(72) Erfinder: Autenrieth, Rainer, 89155 Erbach (DE); Christen, Andreas, 53940 Kehr (DE); zur Megede, Detlef, Dr., 89347 Bubesheim (DE)

(57) **Zusammenfassung**

Die Erfindung bezieht sich auf einen Methanolreformierungsreaktor mit einem Reformierungsreaktionsraum, in den ein Methanolreformierungskatalysator eingebracht ist, sowie auf ein Verfahren zur Behandlung eines hierfür verwendbaren Methanolreformierungskatalysators.

Erfindungsgemäß liegt der Methanolreformierungskatalysator bei Beginn des Reformierungsreaktionsbetriebes vorgealtert im Reformierungsreaktionsraum vor. Ein Verfahren zur Behandlung eines dafür verwendbaren Methanolreformierungskatalysators beinhaltet das Ausheizen desselben vor Verwendung zur Katalysierung einer Methanolreformierungsreaktion bei einer Temperatur zwischen etwa 240°C und etwa 350°C und einer Belastung zwischen etwa 0,5m³H₂/h und etwa 50m³H₂/h pro Liter Katalysatormaterial in einer Methanol/Wasser-Atmosphäre.

Verwendung zum Beispiel in brennstoffzellenbetriebenen Kraftfahrzeugen zur Erzeugung von Wasserstoff für die Brennstoffzellen mittels Wasserdampfreformierung von Methanol.

## Beschreibung

Die Erfindung bezieht sich auf einen Methanolreformierungsreaktor mit einem Reformierungsreaktionsraum, in den ein Methanolreformierungskatalysator eingebracht ist, sowie auf ein Verfahren zur Behandlung eines dafür verwendbaren Katalysators. Solche Reformierungsreaktoren dienen beispielsweise zur Erzeugung von Wasserstoff für die Brennstoffzellen eines brennstoffzellenbetriebenen Kraftfahrzeuges.

Methanolreformierungskatalysatoren sind in verschiedenen Zusammensetzungen bekannt, siehe zum Beispiel die Offenlegungsschriften DE 33 14 131 A1, DE 35 31 757 A1, EP 0 201 070 A2 und JP 4-141234 (A). Meist wird der Methanolreformierungskatalysator in Form einer Katalysatorpelletschüttung in den Reformierungsreaktionsraum eingebracht.

Eine bekannte Tatsache praktisch aller gängigen Methanolreformierungskatalysatoren besteht darin, daß sie in den ersten Betriebsstunden eine merkliche Volumenabnahme erfahren, die eine entsprechende Abnahme der spezifischen Aktivität des Katalysatormaterials und damit der Leistungsfähigkeit eines den Katalysator beinhaltenden Methanolreformierungsreaktors zur Folge hat.

Bei einem in der Offenlegungsschrift JP 63-310703 (A) offenbarten Methanolreformierungsreaktor der eingangs genannten Art wird der Methanolreformierungskatalysator im Reformierungsreaktionsraum mittels einer druckfederbelasteten, beweglich angeordneten, gasdurchlässigen Deckplatte unter Preßdruck gehalten. Vor dem Beginn des Reformierungsreaktionsbetriebes wird eine Reduktionsreaktion für den im Reformierungsreaktionsraum befindlichen Reformierungskatalysator durchgeführt, dessen Volumen daraufhin abnimmt. Die federbelastete Deckplatte drückt das Katalysatormaterial entsprechend zusammen und sorgt auf diese Weise für die Aufrechterhaltung einer dichten Packung der Katalysatorschüttung. Die Reduktionsreaktion ist ein für den Betrieb eines Cu-Katalysators notwendiger Vorgang. Der dabei auftretende Volumenschwund ist deutlich geringer als der Volumenschwund, der während des normalen Reformierungsbetriebs auftritt.

Aus der Offenlegungsschrift GB 2 132 108 A ist ein Methanolreformierungsreaktor bekannt, bei dem zum schnellen Anfahren des Reaktors jeweils vor Beginn einer Reformierungsbetriebsphase der im Reaktionsverfahren befindliche Reformierungskatalysator direkt und indirekt dadurch aufgeheizt wird, daß Methanol an Luft verbrannt und das Verbrennungsabgas sowohl durch einen mit dem Reaktionsraum in Wärmekontakt stehenden Temperierraum als auch durch den katalysatorbefüllten Reaktionsraum selbst hindurchgeleitet wird. Für den Verbrennungsvorgang kann ein unterstöchiometrischer Sauerstoffanteil gewählt sein, und zur Vermeidung von Überhitzungen des Katalysators kann in den zum Reaktionsraum geleiteten Verbrennungsgasstrom Wasser eingedüst werden.

In der Auslegeschrift DE 1 246 688 ist ein Methanolreformierungsreaktor offenbart, der ein Nickelkatalysatorbett und ein nachgeschaltetes Zink-Kupfer-Katalysatorbett umfaßt. Der Reformierungsreaktionsbetrieb wird periodisch für Katalysatorbehandlungsphasen unterbrochen, während denen das Katalysatorsystem durch Spülen mit einem freien Sauerstoff enthaltenden Gas bei erhöhter Temperatur von vorzugsweise 150°C bis 450°C regeneriert und anschließend bei Bedarf einer Spülung mit einem freien Wasserstoff enthaltenden Gas unterzogen wird, um den Nickelkatalysator zu reaktivieren. Der Nickelkatalysator wird z.B. aus einem Nickelsalz hergestellt, wobei am Ende des Herstellungsprozesses die endgültige Aktivierung durch Reduktion zu metallischem Nickel in einer wasserstoffhaltigen oder einer Inertgas-Atmosphäte wärhend einer Behandlungsdauer von bis zu etwa 16 Stunden bei einer Temperatur zwischen 150°C und 600°C und einem Druck bis 14 bar. Nach dieser Reduktion darf der Nickelkatalysator nicht mehr mit Luft in Berührung kommen, um eine Oxidation des Nickels zu verhindern.

Der Erfindung liegt als technisches Problem die Bereitstellung eines Methanolreformierungsreaktors, der keine merkliche Abnahme seiner Leistungsfähigkeit in den ersten Betriebsstunden aufgrund einer durch Volumenabnahme des Methanolreformierungskatalysators verursachten Verminderung der spezifischen Katalysatoraktivität zeigt, sowie eines Verfahrens zugrunde, durch das sich ein Methanolreformierungskatalysator so behandeln läßt, daß er für einen derartigen Reaktor geeignet ist.

Die Erfindung löst dieses Problem durch die Bereitstellung eines Methanolreformierungsreaktors mit den Merkmalen des Anspruchs 1 und eines Behandlungsverfahrens mit den Merkmalen des Anspruches 2.

Bei dem Reaktor nach Anspruch 1 liegt der Methanolreformierungskatalysator bei beginnendem Reformierungsreaktionsbetrieb bereits in vorgealtertem Zustand in dem Reformierungsreaktionsraum vor. Der typische Volumenschwund des Katalysatormaterials findet dadurch bereits während des Voralterungsprozesses statt. Die Voralterung kann vor Einbringen des Katalysatormaterials in den Reaktionsraum oder in demselben erfolgen, wobei in letzterem Fall Katalysatormaterial nachgefüllt wird, um den Volumenschwund zu kompensieren und so das Katalysatoraufangsvolumen beizubehalten. Bei Aufnahme des Reformierungsreaktionsbetriebes tritt auf diese Weise keine merkliche Volumenabnahme des Katalysatormaterials mehr auf, so daß dementsprechend der Umsatz des Reaktors gerade auch im anfänglichen Reformierungsreaktionsbetrieb weniger stark abfällt als beim Starten mit nicht vorgealtertem Methanolreformierungskatalysator. Durch das Starten mit bereits vorgealtertem Katalysatormaterial fällt zudem im Reformierungsreaktionsraum keine signifikante Menge an ausgetragenem Katalysatormaterial mehr an, das ansonsten Schädigungen von nachfolgenden Komponenten der Reaktoranlage verursachen kann. Dies begünstigt lange Standzeiten des Reformierungsreaktors.

Bei dem Behandlungsverfahren nach Anspruch 2 wird der Methanolreformierungskatalysator dadurch zwecks Voralterung behandelt, daß er in einer Methanol/Wasser-Atmosphäre bei Temperaturen zwischen etwa 240°C und etwa 350°C und einer Belastung zwischen etwa 0,5m³H₂/h und etwa 50m³H₂/h pro Liter Katalysatormaterial behandelt wird, wobei sich der Ausheizvorgang über eine Zeitdauer zwischen einer Stunde und 50 Stunden erstreckt.

Bei einem nach Anspruch 3 weitergebildeten Methanolreformierungsreaktor liegt ein nach dem Verfahren von Anspruch 2 vorgealterter Methanolreformierungskatalysator bei Beginn des Reformierungsreaktionsbetriebes im Reformierungsreaktionsraum vor.

Als Beispiel sei stellvertretend für zahlreiche weitere Realisierungen der Erfindung ein Methanolreformierungsreaktor zur Wasserdampfreformierung von Methanol erwähnt, bei dem ein Cu/ZnO-Material als katalytisch aktiver Bestandteil verwendet wird, der sich beispielsweise auf einem Aluminiumoxid-Träger befindet. Dieser Cu/ZnO/Al₂O₃-Methanolreformierungskatalysator läßt sich in herkömmlicher Weise zum Beispiel in Form von Pellets bereitstellen und als Katalysatorpelletschüttung in den Reformierungsreaktionsraum des Methanolreformierungsreaktors einbringen. Derartige Methanolreformierungsreaktoren sind in verschiedenen Typen bekannt und bedürfen daher hier keiner näheren Erläuterung und zeichnerischen Darstellung.

Vor Beginn des Reformierungsreaktionsbetriebes mit dem Reaktor wird der Methanolreformierungskatalysator einem Voralterungsprozeß unterworfen. Dies kann außerhalb des Reformierungsreaktionsraums oder in demselben erfolgen, wobei in letzterem Fall während des Voralterungsprozesses mehrmals Katalysatormaterial nachgefüllt wird, um den eintretenden Volumenschwund zu kompensieren. Der Voralterungsprozeß besteht in einem Behandeln des Cu/ZnO-Katalysators bei Temperaturen zwischen etwa 240°C und etwa 350°C über eine Zeitdauer zwischen einer Stunde und 50 Stunden, vorzugsweise mehrere Stunden, in einer Methanol/Wasser-Dampfatmosphäre bei einer Belastung zwischen etwa 0,5m³H₂/h und etwa 50m³H₂/h pro Liter Katalysatormaterial. Dabei sinkt mit steigender Belastung die notwendige Prozeßdauer für die Voralterung. Die Voralterungsbehandlung wird jeweils so lange aufrechterhalten, bis der anfängliche merkliche Volumenschwund zum Stillstand kommt. Dies wird dann angenommen, wenn die zu diesem Zweck überwachte Volumenschwundrate einen vorgebbaren, ausreichend niedrig gewählten Schwellwert unterschritten hat.

Durch den Voralterungsprozeß erfährt das Katalysatormaterial den typischen anfänglichen Volumenschwund. Die gewählten Prozeßbedingungen gewährleisten, daß der am Ende des Prozesses erhaltenne, vorgealterte Cu/ZnO-Methanolreformierungskatalysator im wesentlichen vollständig geschrumpft vorliegt, d.h. bei der anschließenden Verwendung zur Katalysierung der Methanolreformierungsreaktion in seinem Volumen nicht mehr merklich abnimmt. Es versteht sich, daß die Prozeßbedingungen für die Erreichung dieses Voralterungszustandes mit im wesentlichen vollständiger Volumenreduktion je nach Anwendungsfall und insbesondere je nach dem gerade vorliegenden Katalysatormaterial geeignet eingestellt werden. Dabei wird das Katalysatormaterial vorzugsweise auf das kleinste erreichbare Volumen geschrumpft.

Nach Abschluß des Voralterungsprozesses wird der vorgealterte Methanolreformierungskatalysator in den Reformierungsreaktionsraum eingefüllt, falls er nicht bereits dort vorgealtert wurde. Dabei ist das Katalysatormaterial entweder in inerter Atmosphäre zu transportieren oder aber mit einer geeigneten, herkömmlichen Reduktionsreaktion zu reduzieren. Ein dergestalt reduzierter Methanolreformierungskatalysator kann bei Bedarf für eine spätere Verwendung in einem geschlossenen Behälter aufbewahrt werden, wodurch sich der Voralterungseffekt aufrechterhalten läßt.

Sobald auf diese Weise der Methanolreformierungskatalysator in vorgealtertem Zustand im Reformierungsreaktionsraum des Reaktors vorliegt, kann der Reaktor zur Durchführung des Reformierungsreaktionsbetriebes, speziell zur Wasserdampfreformierung von Methanol, gestartet werden. Der somit bereits bei diesem Betriebsstart geeignet vorgealtert vorliegende Methanolreformierungskatalysator erfährt selbst in den ersten Reaktorbetriebsstunden keine signifikante Volumenabnahme mehr. Dementsprechend bleibt die spezifische Aktivität des Methanolreformierungskatalysators und damit der vom Reaktor erzielte Reaktionsumsatz schon ab Beginn des Reformierungsreaktionsbetriebes im wesentlichen konstant, ohne merklich abzufallen.

Ein weiterer Vorteil des bei Beginn des Reformierungsreaktionsbetriebes vorgealtert im Reformierungsreaktionsraum vorliegenden Methanolreformierungskatalysators besteht darin, daß für den anschließenden Reformierungsreaktionsbetrieb keine nennenswerten Mengen an austragbaren Katalysatorbestandteilen mehr entstehen, die ansonsten zu Schädigungen in nachfolgenden Reaktoranlagenkomponenten führen könnten.

Der erfindungsgemäße Methanolreformierungsreaktor eignet sich unter anderem besonders zum Einsatz in brennstoffzellenbetriebenen Kraftfahrzeugen, um dort durch die Wasserdampfreformierung von flüssig mitgeführtem Methanol den für die Brennstoffzellen benötigten Wasserstoff zu erzeugen.

## Patentansprüche

1. Methanolreformierungsreaktor mit
- einem Reformierungsreaktionsraum, in den ein Methanolreformierungskatalysator eingebracht ist,
**dadurch gekennzeichnet, daß**
- der Methanolreformierungskatalysator vor Beginn des Reformierungsreaktionsbetriebes in den Reformierungsreaktionsraum volumenschrumpfend vorgealtert eingebracht ist oder im Reformierungsreaktionsraum unter volumenschwundkompensierendem Nachfüllen von Katalysatormaterial volumenschrumpfend vorgealtert ist, wobei der Voralterungsprozeß so lange durchgeführt wird, bis die Volumenschwundrate des Katalysators unter einen vergebbaren Schwellwert gefallen ist.

2. Verfahren zur Behandlung eines Methanolreformierungskatalysators,
**dadurch gekennzeichnet, daß**
der Methanolreformierungskatalysator vor Verwendung zur Katalysierung einer Methanolreformierungsreaktion durch eine Behandlung für eine Zeitdauer zwischen einer Stunde bis 50 Stunden in einer Methanol/Wasser-Atmosphäre bei Temperaturen zwischen etwa 240°C und etwa 350°C und einer Belastung zwischen etwa 0,5m³H₂/h und etwa 50m³H₂/h pro Liter Katalysatormaterial vorgealtert wird, bis seine Volumenschwundrate unter einen vergebbaren Schwellwert gefallen ist.

3. Methanolreformierungsreaktor nach Anspruch 1, weiter
**dadurch gekennzeichnet, daß**
der Methanolreformierungskatalysator durch das Behandlungsverfahren nach Anspruch 2 vorgealtert ist.
